# EUROPÄISCHE PATENTANMELDUNG

(11) **EP 4 623 695 A1**
(43) Veröffentlichungstag der Anmeldung: **01.10.2025**
(21) Anmeldenummer: 24166627.0
(22) Anmeldetag: 27.03.2024
(51) Int. Cl.: A22C 11/00, A22C 17/00

(54) **HEBEVORRICHTUNG FÜR EINE LEBENSMITTELVERARBEITENDE MASCHINE**

(71) Anmelder: Albert Handtmann Maschinenfabrik GmbH & Co. KG, 88400 Biberach (DE)
(72) Erfinder: Sauter, Martin, 89608 Griesingen (DE); Menz, Martin, 88422 Bad Buchau (DE)
(74) Vertreter: Grünecker Patent- und Rechtsanwälte PartG mbB

(57) **Zusammenfassung**

Die Erfindung betrifft eine Hebevorrichtung, insbesondere Hebevorrichtung für eine lebensmittelverarbeitende Maschine und eine lebensmittelverarbeitende Maschine mit einer Aufnahme für einen Förderwagen, wobei die Aufnahme Aufnahmeschlitze für seitlich am Förderwagen angeordnete Verriegelungsschienen aufweist und mit einem Verriegelungselement, das in einer Verriegelungsposition P eine Verriegelungsschiene in einem Aufnahmeschlitz verriegelt. Ferner ist eine Sensoreinrichtung zum Erfassen, ob das Verriegelungselement in der Verriegelungsposition ist, vorgesehen.

## Beschreibung

Die Erfindung betrifft eine Hebevorrichtung für eine lebensmittelverarbeitende Maschine, eine lebensmittelverarbeitende Maschine sowie ein Verfahren zum Anheben eines Förderwagens gemäß den Oberbegriffen der Ansprüche 1, 11 und 13.

Beim Befüllen von lebensmittelverarbeitenden Maschinen, wie z.B. Füllmaschinen, Kuttern, Tumblern etc., werden Hebevorrichtungen mit Aufnahmen, d.h. Hubkörben benötigt, in denen ein Förderwagen, z.B. ein Brätwagen aufgenommen werden kann. Der Förderwagen wird durch den Bediener in die Aufnahme geschoben und die Verriegelung rastet mittels Federmechanismus ein und sichert damit den Förderwagen vor dem Herausfallen. Hierbei muss der Bediener explizit darauf achten, dass der Brätwagen richtig platziert und vollständig in der Brätwagenaufnahme eingefahren wird.

In der deutschen Norm DIN 9797 "Förderwagen und Aufnahme für Förderwagen" sind die Gestaltung und die Mindestanforderungen an Förderwagen und Aufnahmen für Förderwagen geregelt. Es handelt sich hier um eine sicherheitsrelevante Einrichtung, da Lasten von bis zu ca. 350 kg angehoben werden.

Es ist bereits aus dem Stand der Technik bekannt abzufragen, ob ein Brätwagen eingeschoben ist. Aufgrund dessen, dass ausschließlich der Förderwagen sensorisch abgefragt wird, kann es durch einen technischen Defekt an der Verriegelung (z.B. Federbruch, Verklemmen der Verriegelung) dazu kommen, dass der Förderwagen nicht sicher verriegelt ist und beim Anheben der Hebevorrichtung nach hinten aus der Aufnahme herausrutscht und dadurch möglicherweise sehr schwere Personen- und/oder Sachschäden verursacht. Deshalb muss der Bediener zuverlässig auf das richtige Einfahren und Einrasten des Brätwagens achten. Die unterschiedlichen Verriegelungen bzw. mechanischen Sperren sind ebenfalls in der DIN 9797 näher erläutert.

Hiervon ausgehend liegt der vorliegenden Erfindung die Aufgabe zugrunde, eine verbesserte Hebevorrichtung und eine verbesserte lebensmittelverarbeitende Maschine sowie ein entsprechendes Verfahren zum Anheben eines Förderwagens bereitzustellen, die einen sichereren und einfacheren Betrieb für den Bediener ermöglichen.

Erfindungsgemäß wird die vorliegende Erfindung durch die kennzeichnenden Merkmale der Ansprüche 1, 11 und 13 gelöst.

Erfindungsgemäß weist die Hebevorrichtung für eine lebensmittelverarbeitende Maschine, insbesondere eine Armhebevorrichtung eine Aufnahme für einen Förderwagen auf. Die lebensmittelverarbeitende Maschine kann dabei beispielsweise eine Füllmaschine, ein Kutter oder ein Tumbler etc. sein. Die Aufnahme ist an einem Hubelement, das sich nach oben bewegen kann, insbesondere an einem Hubarm befestigt und kann am Hubelement zusammen mit dem Förderwagen nach oben gefahren werden. Die Aufnahme ist beispielsweise in Form eines U-förmigen Hubkorbs realisiert, in den der Förderwagen, beispielsweise Brätwagen aufgenommen werden kann. Die Aufnahme weist dazu, wie allgemein bekannt ist, Aufnahmeschlitze für seitlich am Förderwagen angeordnete Verriegelungsschienen bzw. Pratzen auf, wie beispielsweise auch in der DIN 9797 geregelt ist. Ferner ist ein Verriegelungselement vorgesehen, das in einer Verriegelungsposition die Verriegelungsschienen in den Aufnahmeschlitzen verriegelt, d.h., dass der Förderwagen vor dem Herausfallen aus der Aufnahme gesichert ist, wenn er nach oben gehoben wird und zum Entleeren verschwenkt wird.

Erfindungsgemäß weist die Hebevorrichtung eine Sensoreinrichtung auf zum Erfassen ob das Verriegelungselement in der Verriegelungsposition ist. Im Gegensatz zum Stand der Technik wird nun nicht nur erfasst ob sich ein Förderwagen in einer korrekten Position befindet, sondern stattdessen wird die Position, d.h., die Stellung des Verriegelungselements selbst abgefragt. Durch diese Abfrage kann es z.B. nicht mehr passieren, dass ein Förderwagen, der nicht korrekt in die Aufnahme eingefahren wurde, von der Hebevorrichtung angehoben wird, da z.B. dann die Steuerung der lebensmittelverarbeitenden Füllmaschine entsprechendes verhindern kann, wenn die Sensoreinrichtung erfasst, dass das Verriegelungselement nicht in der Verriegelungsposition ist. Somit kann stets sichergestellt werden, dass im Betrieb der Hebevorrichtung der Förderwagen ordnungsgemäß verriegelt ist.

Es ist ausreichend, wenn ein Verriegelungselement auf nur einer Seite, bzw. einem Aufnahmearm der z.B. u-förmigen Aufnahme angeordnet ist und die Sensoreinrichtung erfasst, ob dieses Verriegelungselement in der Verriegelungsposition ist.

Die Sensoreinrichtung kann dazu ein Freigabesignal zum Bedienen der Hebevorrichtung, d.h., zum Anheben des Hubarms erzeugen, wenn das Verriegelungselement in der Verriegelungsposition P ist. Dieses Freigabesignal kann dann an eine Steuerung der Hebevorrichtung geleitet werden oder falls diese in der Maschinensteuerung der lebensmittelverarbeitenden Maschine integriert ist, an die Maschinensteuerung geleitet werden.

Befindet sich das Verriegelungselement nicht in der Verriegelungsposition P wird kein entsprechendes Freigabesignal erzeugt und die Hebevorrichtung kann nicht betrieben werden, d.h., der Hubarm kann nicht angehoben werden.

Gemäß einer bevorzugten Ausführungsform ist das Verriegelungselement ein bewegliches Verriegelungselement, das selbständig schließt und die Verriegelungsposition einnimmt, wenn der Förderwagen vollständig, insbesondere bis zu einem Anschlag, eingeschoben wird. Dies bringt den Vorteil mit sich, dass der Bediener nicht extra manuell das Verriegelungselement in die Verriegelungsposition P bringen muss und die Beschickung der Hebevorrichtung mit dem Förderwagen somit vereinfacht wird. Spätestens, wenn der Förderwagen vollständig, insbesondere bis zu einem Anschlag, eingeschoben wird, erfolgt die Verriegelung durch das Verriegelungselement. Vorteilhafterweise nimmt das Verriegelungselement auch die Verriegelungsposition ein, wenn kein Förderwagen in die Aufnahme eingeschoben wird, d.h., also die Aufnahme leer ist. Dies bringt den Vorteil mit sich, dass dann auch ein Freigabesignal an, beispielsweise die Steuerung der lebensmittelverarbeitenden Maschine, geschickt werden kann, wenn die Aufnahme des Hubarms leer ist, so dass grundsätzlich auch dann der Hubarm angehoben werden kann.

Vorteilhafterweise ist das Verriegelungselement als Hebel ausgebildet und wird beim Einschieben der Verriegelungsschienen in die Aufnahmeschlitze weggeschwenkt. So können die Verriegelungsschienen in die Aufnahmeschlitze einfahren wodurch der Hebel weggeschwenkt wird. Wenn der Förderwagen eine bestimmte Strecke, d.h., insbesondere vollständig bis zu einem Anschlag eingeschoben ist, haben sich die Verriegelungsschienen so weit in Einschubrichtung in den Aufnahmeschlitzen bewegt, dass ausreichend Platz ist, dass das Verriegelungselement wieder zurückschwenken kann und den Aufnahmeschlitz an seinem hinteren Ende verschließt und somit die Verriegelungsschiene in dem Aufnahmeschlitz verriegeln kann.

Damit das Verriegelungselement selbständig schließen kann wird das Verriegelungselement, insbesondere der Hebel, durch eine Rückstellkraft, insbesondere Federkraft einer Rückstellfeder, in die Verriegelungsposition gebracht, insbesondere zurückgeschwenkt. Das heißt, dass die Grundposition des Verriegelungselements die Verriegelungsposition P ist und nur bei Einschieben und Ausschieben des Förderwagens die Verriegelungsposition P verlässt.

Vorteilhafterweise ist das Verriegelungselement, insbesondere der Hebel durch Betätigung der Verriegelungseinrichtung entriegelbar, wobei der Hebel insbesondere derart verschwenkbar ist, dass die Verriegelungsschienen aus den Aufnahmeschlitzen herausgezogen werden können. Auf diese Weise kann der Bediener eine Kraft aufbringen, die größer ist als die Rückstellkraft des Verriegelungselements und kann so den Förderwagen aus der Aufnahme wieder herausschieben.

Gemäß einem bevorzugten Ausführungsbeispiel ist das Verriegelungselement als Tritthebel ausgebildet, d.h., dass der Bediener auf eine Entriegelungseinrichtung, z.B. Auftrittfläche treten kann, so dass der Tritthebel aus der Verriegelungsposition herausgeschwenkt wird und den Aufnahmeschlitz freigibt. Entsprechendes ist besonders einfach für den Bediener.

Gemäß einem bevorzugten Ausführungsbeispiel umfasst die Sensoreinrichtung einen Sensor, insbesondere einen optischen oder elektrischen Sensor oder eine elektromechanische Abtasteinrichtung. So kann auf einfache Art und Weise erfasst werden, in welcher Position sich das Verriegelungselement befindet. Ein entsprechendes Signal kann dann z.B. an die lebensmittelverarbeitende Maschine bzw. deren Steuerung weitergeleitet werden.

Gemäß einem bevorzugten Ausführungsbeispiel ist an dem Verriegelungselement, insbesondere am Hebel, ein Betätiger angeordnet, dessen Position erfassbar ist und der insbesondere in einer Verriegelungsposition einen Sensor betätigt. Somit kann auf einfache Art und Weise z.B. durch Bewegung des Hebels der am Hebel angeordnete Betätiger den Sensor betätigen, zum Beispiel einen Schalter schalten etc. zur Erzeugung eines Freigabesignals. Vorzugsweise kann der Betätiger als Kontaktgeber in der Verriegelungsposition des Hebels den Sensor aktivieren um das Freischaltsignal zu erzeugen. Hierzu können sich der Betätiger und der Sensor kontaktieren oder die Aktivierung erfolgt kontaktlos wobei z.B. ein codierter Magnet den Sensor aktiviert etc..

Die Sensoreinrichtung kann eine Abtasteinrichtung aufweisen, die als Sicherheitssensor mit einer Auswerteeinrichtung ausgeführt sein kann.

Gemäß einem Ausführungsbeispiel kann die Aufnahme als U-förmiger Aufnahmekorb ausgebildet sein und das Verriegelungselement an einem der gegenüberliegenden Aufnahmearme angeordnet sein, insbesondere an dem Aufnahmearm (, der dem Aufnahmearm, an dem ein Hubarm befestigt ist, gegenüberliegt. An diesem Arm ist ausreichend Platz für den Hebel und die Sensoreinrichtung.

Die Erfindung betrifft auch eine lebensmittelverarbeitende Maschine mit einer Hebevorrichtung nach mindestens einem der Ansprüche 1 bis 9, wobei die lebensmittelverarbeitende Maschine eine Steuereinrichtung aufweist, die ein Freigabesignal von der Sensoreinrichtung erhält, wenn das Verriegelungselement in einer Verriegelungsposition P ist. Durch Koppeln der Sensoreinrichtung mit der Steuerung der lebensmittelverarbeitenden Maschine ist eine sichere Funktion der Hebevorrichtung gewährleistet.

Die Steuereinrichtung gibt bei Fehlen des Freigabesignals der Sensoreinrichtung software- oder hardwareseitig keine Freigabe für die Betätigung der Hebevorrichtung, d.h., dass der Hebearm nicht angehoben werden kann. Das heißt, die Steuereinrichtung weist ein Software- oder Hardware-Interlock auf, das bei Fehlen eines Freigabesignals die Betätigung der Hebevorrichtung sperrt.

Die Erfindung betrifft auch ein Verfahren zum Anheben eines Förderwagens mit einer Hebevorrichtung einer lebensmittelverarbeitenden Maschine, insbesondere nach Anspruch 11 oder 12, wobei ein Förderwagen in eine Aufnahme für einen Förderwagen eingeschoben wird und erfasst wird, ob ein Verriegelungselement zum Verriegeln von Verriegelungsschienen am Förderwagen in Aufnahmeschlitzen der Aufnahmen in einer Verriegelungsposition ist.

Eine Steuereinrichtung der lebensmittelverarbeitenden Maschine gibt vorzugsweise die Betätigung der Hebevorrichtung nur frei, wenn sie von der Sensoreinrichtung ein Freigabesignal erhält.

Gemäß einem bevorzugten Ausführungsbeispiel wird der Förderwagen in die Aufnahme eingeschoben, wodurch eine Verriegelungsschiene das Verriegelungselement aus der Verriegelungsposition P schiebt, insbesondere wegschwenkt, wobei dann, wenn der Förderwagen vollständig, insbesondere bis zu einem Anschlag eingefahren ist, dass Verriegelungselement sich, insbesondere automatisch, in die Verriegelungsposition zurückbewegt.

Die vorliegende Erfindung wird nachfolgend unter Bezugnahme folgender Figuren näher erläutert:
- Fig. 1: zeigt in perspektivischer Darstellung eine lebensmittelverarbeitende Maschine gemäß der vorliegenden Erfindung,
- Fig. 2: zeigt eine Seitenansicht eines Förderwagens gemäß einem Ausführungsbeispiel der vor-liegenden Erfindung,
- Fig. 3: zeigt schematisch den in Fig. 2 gezeigten Förderwagen in Vorderansicht,
- Fig. 4: zeigt grobschematisch eine Seitenansicht durch einen Arm einer Aufnahme einer Hebevorrichtung gemäß einem bevorzugten Ausführungsbeispiel der vorliegenden Erfindung in einer Verriegelungsposition des Verriegelungselements,
- Fig. 5: entspricht der in Fig. 4 gezeigten Darstellung in einer nicht verriegelten Position des Verriegelungselements beim Einschieben des Förderwagens,
- Fig. 6: entspricht den in Fig. 4 und 5 gezeigten Darstellungen in einer Verriegelungsposition des Verriegelungselements mit eingeschobener Verriegelungsschiene in der Verriegelungsposition,
- Fig. 7: zeigt den in den Fig. 2 bis 6 gezeigten Arm der Aufnahme in perspektivischer Darstellung,
- Fig. 8: zeigt die in Fig. 1 gezeigte Aufnahme vergrößert, in perspektivischer Darstellung.

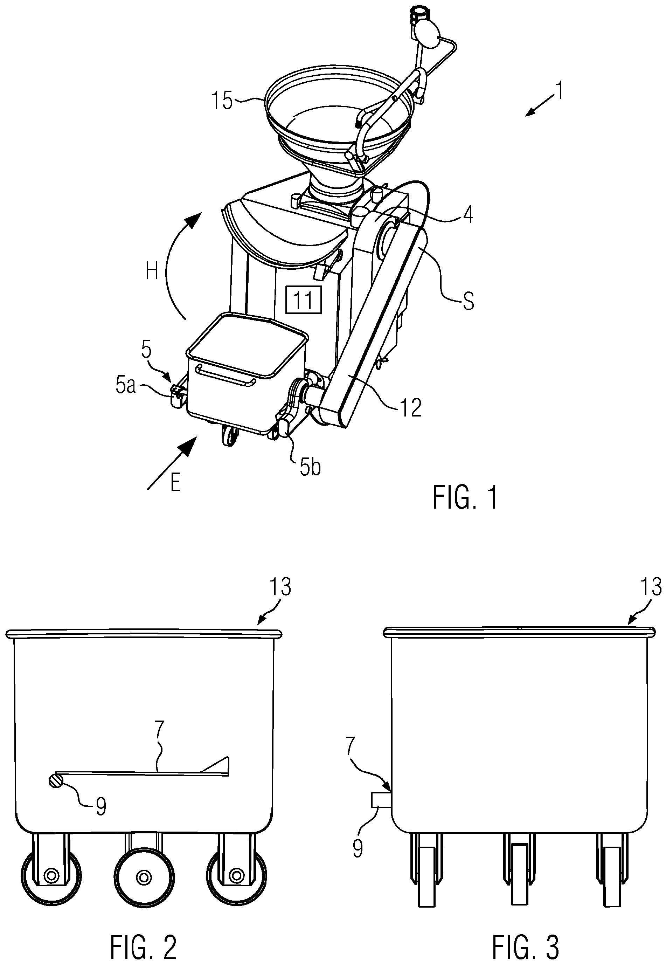

Fig. 1 zeigt eine lebensmittelverarbeitende Maschine 1, hier in Form einer Füllmaschine 1, die z.B. für die Wurstherstellung verwendet werden kann. Eine solche Füllmaschine weist einen Trichter 15 für das zu verarbeitende Lebensmittel, beispielsweise Wurstbrät auf sowie eine nicht dargestellte Förderpumpe, z.B. eine Flügelzellenpumpe und ein Füllrohr zum Ausstoßen der Lebensmittelmasse, beispielsweise in eine Wursthülle. Solche lebensmittelverarbeitenden Maschinen können auch Kutter, Tumbler etc. sein.

Beim Befüllen von solchen Maschinen, hier der Füllmaschine, ist es notwendig, das Lebensmittel, das in einem Förderwagen angeliefert wird, im Förderwagen anzuheben und beispielsweise in den Trichter 15 einzukippen. Dazu werden Hebevorrichtungen verwendet, insbesondere eine Armhebevorrichtung 4, wie sie in Fig. 1 gezeigt ist. Solche Hebevorrichtungen weisen einen Hubarm 12 auf, der um die Achse S nach oben verschwenkt werden kann und in bekannter Weise einen Kippmechanismus aufweist um den Förderwagen 13, der in einer Aufnahme 5 aufgenommen und verriegelt ist, in den Trichter 15 zu kippen. Die Hebevorrichtung ist hier nur beispielhaft. Es gibt auch andere Hubmechanismen zum Anheben des Förderwagens 13, die aber ebenfalls eine entsprechende Aufnahme 5 an einem Hubelement aufweisen.

Die Aufnahme 5 ist vorzugsweise als U-förmiger Aufnahmekorb ausgebildet, in dem in Einschubrichtung E der Förderwagen 13, wie durch den Pfeil in Fig. 1 dargestellt ist, eingeschoben werden kann. Die Aufnahme muss nicht zwangsläufig u- förmig sein aber zwei parallele Arme in Einschubrichtung aufweisen, zwischen denen der Förderwagen eingeschoben wird.

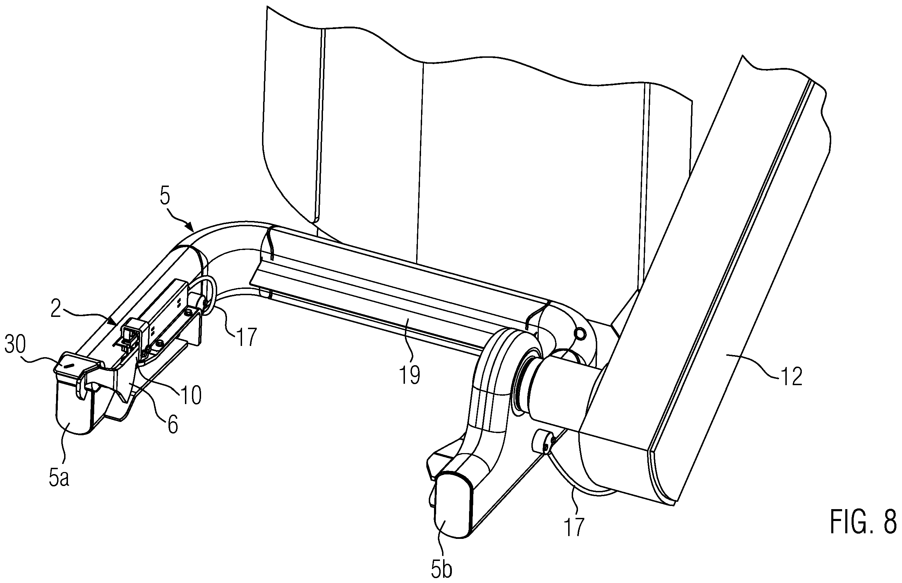

Fig. 8 zeigt diese Aufnahme 5 in größerem Detail. An dem in Einschubrichtung E abgewandten Ende kann beispielsweise eine flexible Tropfschutzleiste 19 angeordnet sein, die an der Vorderseite des Förderwagens 13 anliegt. Die Aufnahme weist die parallelen Aufnahmearme 5a und 5b auf. Am Aufnahmearm 5b ist der Hubarm 12 befestigt. Am Aufnahmearm 5a ist das Verriegelungselement 6 und die Sensoreinrichtung 2 angeordnet, die nachfolgend noch näher erläutert werden.

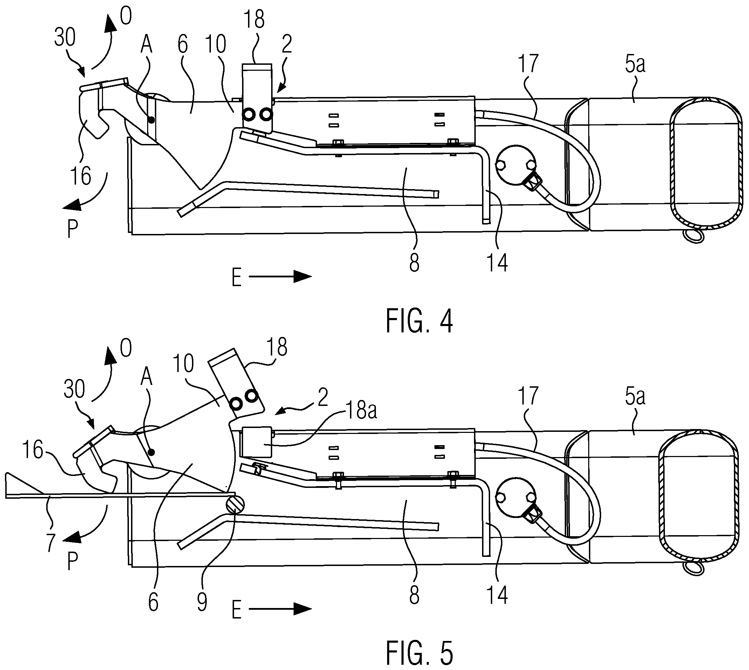

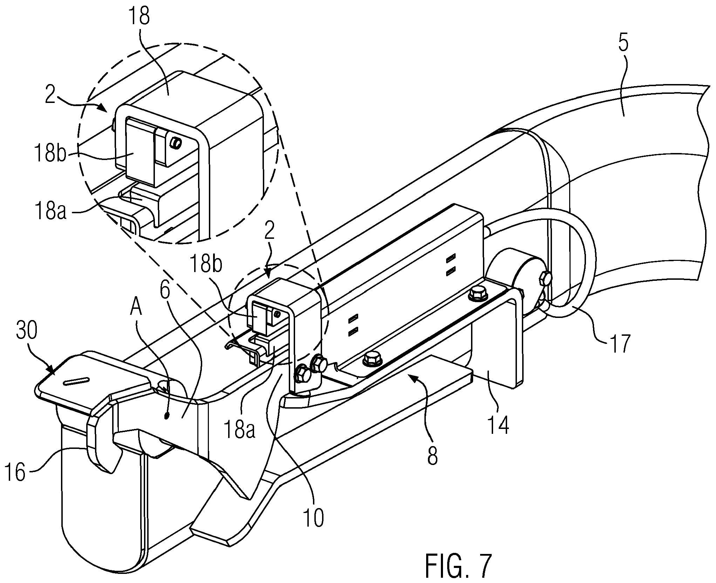

Eine mögliche Ausgestaltung eines Förderwagens ist beispielsweise in Fig. 2 und 3 gezeigt. Die Förderwagen und Aufnahmen für Förderwagen sind in DIN 9797 geregelt und dem Fachmann bekannt. Die Förderwagen 13 sind beispielsweise ausgelegt für ein Fördervolumen von 120 bis 350 Liter und weisen, wie aus Fig. 2 und 3 hervorgeht, an ihrem unteren Ende Laufräder auf. Seitlich am Förderwagen 13 sind Verriegelungsschienen 7 angeordnet, die vorzugsweise an ihrem vorderen Ende eine Nase 9 und am hinteren Ende eine Verbreiterung aufweisen. Diese Verriegelungsschienen 7 werden in entsprechende Aufnahmeschlitze 8 in den Aufnahmearmen 5a,5b der Aufnahme 5 eingeschoben, wenn der Förderwagen 13 in die Aufnahme 5 eingeschoben wird. Entsprechende Aufnahmeschlitze 8 an der Innenseite der Aufnahmearme 5a,5b, der hier z.B. U-förmigen Aufnahme 5, können in Fig. 4 bis 8 erkannt werden. Wie insbesondere aus Fig. 7 hervorgeht, kann der jeweilige Aufnahmeschlitz 8 zwischen zwei vorspringenden Leisten gebildet werden, zwischen die die Verriegelungsschiene 7 eingeführt werden kann.

Die Aufnahmeschlitze 8 sind also z.B. derart durch die zwei gegenüberliegenden vorspringenden Leisten, z.B. Bleche gebildet, dass die untere Leiste am Ende eine Aussparung aufweist so dass eine Sicherung durch Schräglage der Aufnahme erfolgen kann und insbesondere die Nase 9 der Verriegelungsschiene 7 in der Aussparung einrasten kann.

Wesentlich ist, dass ein in die Aufnahme 5 eingeschobener Förderwagen 13 verriegelt wird und sichergestellt werden kann, dass eine entsprechende Verriegelung vorliegt, wenn der Förderwagen 13 nach oben gehoben und verkippt wird. Dazu sieht die vorliegende Erfindung ein Verriegelungselement 6 vor, hier z.B. in Form eines Hebels 6.

Es ist ausreichend, wenn das Verriegelungselement 6 an einer Seite der Aufnahme 5 angeordnet ist, um die Verriegelungsschiene 7 zu verriegeln und an dieser einen Seite mit einer Sensoreinrichtung 2 zu erfassen, ob das Verriegelungselement in der Verriegelungsposition P ist. Bei diesem Ausführungsbeispiel ist das Verriegelungselement und die Sensoreinrichtung an dem Aufnahmearm 5a angeordnet, der an dem Aufnahmearm 5b, an dem das Hubelement, hier Hubarm 12, befestigt ist, gegenüberliegt.

Fig. 4 zeigt eine Seitenansicht auf einen Aufnahmearm 5a der Aufnahme 5 in einer Verriegelungsposition des Verriegelungselements 6 bzw. des Hebels 6. Der Hebel 6 ist drehbar um die Achse A gelagert und weist an seinem oberen Ende einen Arm r 10 auf, der sich hier z.B. in Einschubrichtung E länglich erstreckt und der z.B. einen Bügel 18 mit einem Betätiger 18b aufweist, der sich mit der Bewegung des Hebels mitbewegt, siehe hierzu insbesondere Fig.7. Die Ausgestaltung und Anordnung des Betätigers 18b ist hier nur beispielhaft.

Der Hebel 6 weist einen Abschnitt auf, der so breit ist, dass er den Aufnahmeschlitz 8 zumindest so weit verschließt, dass sich die Verriegelungsschiene 7 nicht aus dem Aufnahmeschlitz 8 in entgegengesetzte Richtung der Einschubrichtung E bewegen kann. Am Hebel 6 ist eine Entriegelungseinrichtung 16, 30 vorgesehen, über die beispielsweise manuell der Hebel 6 um die Drehachse A, wie durch den Pfeil O in Fig.4 und Fig. 5 dargestellt ist, nach oben verschwenkt werden kann. Der Hebel 6 kann auch als Tritthebel ausgebildet sein, d.h. dass vorteilhafterweise die Entriegelungseinrichtung 30 in Form einer Auftrittsfläche im Hebel integriert ist, damit, wenn der Bediener auf die Auftrittsfläche 30 mit dem Fuß drückt, bis der Hebel 6 um die Achse A nach oben verschwenkt wird (wie in Fig. 5 dargestellt ist), der Aufnahmeschlitz 8 freigelegt wird.

Die erfindungsgemäße Vorrichtung weist auch eine Sensoreinrichtung 2 auf zum Erfassen, ob das Verriegelungselement 6 in der Verriegelungsposition P ist oder nicht, wie in Fig. 4 - 8 dargestellt ist und z.B. eine Auswerteeinrichtung zum Erzeugen des Freigabesignals. Die Sensoreinrichtung 2 kann dabei z.B. einen optischen oder elektronischen Sensor 18 a umfassen oder eine elektromechanische Abtasteinrichtung etc.

In diesem Ausführungsbeispiel kann sich der Arm10 am Hebel 6 zusammen mit dem Betätiger 18b, wie insbesondere auch in der perspektivischen Darstellung in Fig. 7 deutlich wird, in Abhängigkeit des Drehwinkels um die Achse A nach oben und unten bewegen. In seiner unteren Verriegelungsposition P, wie beispielsweise in Fig. 4 gezeigt ist, betätigt der Betätiger 18b den Sensor 18a2 und erzeugt somit ein Freigabesignal, das über das Kabel 17 einer Steuerung 11 in der Füllmaschine zugeführt werden kann. Das Kabel 17 kann in das Innere des seitlichen Aufnahmearms 5a der Aufnahme 5 geführt werden und z.B. über den Hubarm 12 an die Maschinensteuerung 11 geführt werden. Dies ist allerdings nur beispielhaft. Das bedeutet, dass, auch wenn kein Förderwagen 13 in die Aufnahme 5 eingeschoben ist, es möglich ist, dass ein Freigabesignal erzeugt wird, so dass auch eine Leerfahrt des Hubelements, insbesondere des Hubarms 12 möglich ist. Dies ist insbesondere so, weil vorzugsweise der Hebel 6 durch eine Rückstellkraft, insbesondere Federkraft einer nicht dargestellten Rückstellfeder, automatisch in die Verriegelungsposition gebracht wird.

Die Sensoreinrichtung umfasst einen Sensor 18a und kann z.B. einen optischen (z.B. Lichtschranke) oder elektrischen bzw. elektronischen Sensor umfassen oder eine elektromechanische Abtasteinrichtung, etc.

Der Sensor 18a kann die Verriegelungsposition je nach Ausführungsform durch Kontakt mit dem Betätiger 18b oder kontaktlos erfassen. Der Betätiger 18b kann dazu z.B. als ein Kontakt 18b ausgebildet sein, der in der Verriegelungsposition P einen am Arm 5a angeordneten Kontakt 18a kontaktiert, derart, dass ein Freigabesignal erzeugt wird.

In diesem Ausführungsbeispiel kann es in der Verriegelungsposition, wie insbesondere aus der Figur 7 hervorgeht, noch einen kleinen Abstand zwischen dem Sensor 18a und dem Betätiger 18b also dem Kontaktgeber in der Verriegelungsposition geben. Hier hat der Hebel 6seine Endposition erreicht und der Sensor 18a erkennt, dass die Verriegelung geschlossen ist und erzeugt das Freigabesignal. Eine solche Ausgestaltung ist besonders einfach, da die Sensoreinrichtung einfach durch einen Sensor 18a mit einem Betätiger, d.h. Kontaktgeber 18b realisiert werden kann. Es können z. B. Sensoren 18a mit einem oder mehreren innenliegenden Kontakten verwendet werden, die z. B. durch Betätiger 18b in Form von codierten Magneten betätigt werden, oder auch elektronische Sensoren 18a, z.B. induktive, Ultraschall-, Hallsensoren, etc. sind geeignet.

Wird nun der Förderwagen 13 in die Aufnahme 5 eingeschoben, so bewegt sich, wie aus Fig. 5 hervorgeht, die Verriegelungsschiene 7 in Richtung des Aufnahmeschlitzes 8. Der Aufnahmeschlitz 8 ist zunächst durch das Verriegelungselement 6 blockiert. Die Verriegelungsschiene 7 drückt hier mit der Nase 9 gegen den Hebel 6, wodurch dieser um die Achse A nach oben verschwenkt wird, so dass die entsprechende Verriegelungsschiene 7 in den jeweiligen Aufnahmeschlitz 8 einfahren kann. Es ist auch möglich, dass die Bewegung des Hebels 6 durch Betätigung der Entriegelungseinrichtung 16 am Hebel 6, insbesondere durch Treten auf die Fläche 30 des Tritthebels unterstützt wird. So wirkt die Entriegelungseinrichtung 16,30 der Rückstellkraft z.B. der Federkraft mit einer größeren Kraft entgegen.

Dadurch bewegt sich auch der Arm10 und somit insbesondere der Betätiger18b nach oben. Das Verriegelungselement 6 befindet sich so nicht mehr in der Verriegelungsposition P und das Freigabesignal wird unterbrochen, da die Sensoreinrichtung 2 nicht mehr vom Betätigter 10 betätigt wird - in diesem Ausführungsbeispiel der Betätigter 18b den Sensor 18a nicht mehr aktiviert.

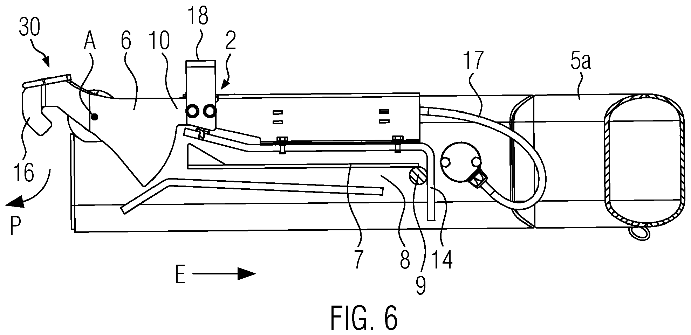

Wenn der Förderwagen 13 dann vollständig, insbesondere bis zu einem Anschlag 14 eingeschoben ist, wird, wie aus Fig. 6 hervorgeht, der Hebel 6 insbesondere automatisch um die Achse A zurück in die Verriegelungsposition P zurückgeschwenkt, so dass die Verriegelungsschiene 7 im Aufnahmeschlitzen 8 verriegelt ist. Dadurch ist auch die Verriegelungsschiene 7 am Aufnahmearm 5b ausreichend fixiert.

Der Hebel 6 kann manuell oder wie beschrieben über eine Rückstellkraft, insbesondere die Federkraft, einer nicht dargestellten Rückstellfeder in die Verriegelungsposition P zurückgesetzt werden. Fig. 6 zeigt nun, dass die Verriegelungsschiene 7 im Aufnahmeschlitz 8 liegt und der hintere Bereich des Aufnahmeschlitzes 8 durch den Hebel 6 blockiert ist, so dass die Verriegelungsschienen 7 sich nicht entgegen der Einschubrichtung E zurückbewegen können. Der Förderwagen 13 ist somit sicher in der Aufnahme 5 fixiert. Gleichzeitig betätigt der Betätiger 18b des Hebels 6 den Sensor 18a der e Sensoreinrichtung 2 derart, dass ein Freigabesignal erzeugt und an die Maschinensteuerung 11 weitergeleitet wird derart, dass die Hebevorrichtung bedient werden kann, d.h. der Förderwagen 13 in der Aufnahme angehoben und verkippt werden kann.

Wenn der Förderwagen entleert worden ist und der Förderwagen über die Hebevorrichtung 4 wieder nach unten verfahren wird und entnommen werden soll, kann über eine Entriegelungsseinrichtung 16,30 der Hebel 6 wieder nach oben verschwenkt werden, so dass sich der Hebel 6 nicht mehr in der Verriegelungsposition befindet und der Förderwagen entgegen der Einschubrichtung E aus der Aufnahme 5 herausbewegt werden kann. Dabei kann vom Bediener insbesondere der Tritthebel betätigt werden. So wird das Freigabesignal unterbrochen, so dass die Hebevorrichtung nicht bewegt werden kann.

Bei Fehlen des Freigabesignals gibt die Steuereinrichtung 11 software- oder hardwareseitig keine Freigabe für die Betätigung der Hebevorrichtung.

Die vorliegende Erfindung ermöglicht also eine verbesserte Hebevorrichtung und eine verbesserte lebensmittelverarbeitende Maschine sowie ein entsprechendes Verfahren zum Anheben eines Förderwagens, die einen sichereren und einfacheren Betrieb für den Bediener ermöglichen, bei dem verhindert werden kann, dass ein nicht ordnungsgemäß verriegelter Förderwagen beim Anheben aus der Aufnahme rutscht. So können schwere Verletzungen der Bediener und Beschädigungen von umliegenden Maschinen auf einfache Art und Weise sicher verhindert werden.

## Patentansprüche

1. Hebevorrichtung (4), insbesondere Armhebevorrichtung (4) für eine lebensmittelverarbeitende Maschine (1) mit einer Aufnahme (5) für einen Förderwagen (13), wobei die Aufnahme (5) Aufnahmeschlitze (8) für seitlich am Förderwagen (13) angeordnete Verriegelungsschienen (7) aufweist und mit
einem Verriegelungselement (6), das in einer Verriegelungsposition (P) eine Verriegelungsschiene (7) in einem Aufnahmeschlitz (8) verriegelt,
**gekennzeichnet durch**
eine Sensoreinrichtung (2) zum Erfassen, ob das Verriegelungselement (6) in der Verriegelungsposition (P) ist.

2. Hebevorrichtung (4) nach Anspruch 1, **dadurch gekennzeichnet, dass** die Sensoreinrichtung (2) ein Freigabesignal zum Bedienen der Hebevorrichtung erzeugen, wenn das Verriegelungselement (6) in der Verriegelungsposition (P) ist.

3. Hebevorrichtung (4) nach Anspruch 1 oder 2, **dadurch gekennzeichnet, dass** das bewegliche Verriegelungselement (6) selbstständig schließt und die Verriegelungsposition (P) einnimmt, wenn der Förderwagen (13) vollständig, insbesondere bis zu einem Anschlag (14) eingeschoben wird und insbesondere das Verriegelungselement (6) die Verriegelungsposition (P) einnimmt, wenn kein Förderwagen in die Aufnahme eingeschoben wird.

4. Hebevorrichtung (4) nach mindestens einem der Ansprüche 1 bis 3, **dadurch gekennzeichnet, dass** das Verriegelungselement (6) als Hebel ausgebildet ist und beim Einschieben der Verriegelungsschienen (7) in die Ausnahmeschlitze (8) weggeschwenkt wird, wobei wenn der Förderwagen (13) vollständig, insbesondere bis zu einem Anschlag (14) eingeschoben ist, er automatisch in die Verriegelungsposition (P) zurückschwenkt und die Verriegelungsschiene in dem Aufnahmeschlitz verriegelt.

5. Hebevorrichtung (4) nach mindestens Anspruch 3 oder 4, **dadurch gekennzeichnet, dass** das Verriegelungselement (6), insbesondere der Hebel, durch eine Rückstellkraft, insbesondere Federkraft einer Rückstellfeder, in die Verriegelungsposition (P) gebracht wird, insbesondere zurückgeschwenkt wird.

6. Hebevorrichtung (4) nach mindestens einem der Ansprüche 1 bis 5, **dadurch gekennzeichnet, dass** das Verriegelungselement (6), insbesondere der Hebel, durch Betätigung der Verriegelungseinrichtung entriegelbar ist, insbesondere verschenkt werden kann, derart, dass die Verriegelungsschienen (7) aus den Aufnahmeschlitzen herausgezogen werden können.

7. Hebevorrichtung (4) nach mindestens einem der Ansprüche 1 bis 6, **dadurch gekennzeichnet, dass** das Verriegelungselement (6) ein Tritthebel ist.

8. Hebevorrichtung (4) nach mindestens einem der vorherigen Ansprüche, **dadurch gekennzeichnet, dass** die Sensoreinrichtung (2) einen optischen oder elektronischen Sensor (18a) umfasst oder eine elektromechanische Abtasteinrichtung.

9. Hebevorrichtung (4) nach mindestens einem der Ansprüche 1 bis 8, **dadurch gekennzeichnet, dass** an dem Verriegelungselement (6), insbesondere am Hebel (6), ein Betätiger (18b) angeordnet ist, dessen Position erfassbar ist, und der insbesondere in einer Verriegelungsposition einen Sensor (18a) betätigt um das Freigabesignal zu erzeugen.

10. Hebevorrichtung (4) nach mindestens einem der Ansprüche 1 - 9, **dadurch gekennzeichnet, dass** die Aufnahme (5) als U-förmiger Aufnahmekorb ausgebildet ist und das Verriegelungselement (6) an einem der gegenüberliegenden Aufnahmearme (5a,5b) angeordnet ist, insbesondere an dem Aufnahmearm (5a), der dem Aufnahmearm (5b), an dem ein Hubarm (12) befestigt ist, gegenüberliegt.

11. Lebensmittelverarbeitende Maschine (1) mit einer Hebevorrichtung (4) nach mindestens einem der Ansprüche 1 bis 10, **dadurch gekennzeichnet, dass** die lebensmittelverarbeitende Maschine (1) eine Steuereinrichtung (11) aufweist, die ein Freigabesignal zum Bedienen der Hebevorrichtung von der Sensoreinrichtung (2) erhält, wenn das Verriegelungselement (6) in einer Verriegelungsposition (P) ist.

12. Lebensmittelverarbeitende Maschine (1) nach Anspruch 11, **dadurch gekennzeichnet, dass** die Steuereinrichtung (11) bei Fehlen des Freigabesignals software- oder hardwareseitig keine Freigabe für die Betätigung der Hebevorrichtung gibt.

13. Verfahren zum Anheben eines Förderwagens (11) mit einer Hebevorrichtung (4) einer lebensmittelverarbeitenden Maschine (1), insbesondere nach Anspruch 11 oder 12, **dadurch gekennzeichnet, dass** ein Förderwagen (13) in eine Aufnahme (5) für einen Förderwagen (13) eingeschoben wird und erfasst wird, ob ein Verriegelungselement (6) zum Verriegeln einer Verriegelungsschiene (7) des Förderwagens (13) in einem Aufnahmeschlitz (8) der Aufnahme (5) in einer Verriegelungsposition (P) ist.

14. Verfahren nach Anspruch 13, **dadurch gekennzeichnet, dass** eine Steuereinrichtung (11) die Betätigung der Hebevorrichtung (4) nur freigibt, wenn sie von der Sensoreinrichtung (2) ein Freigabesignal erhält.

15. Verfahren nach Anspruch 13 oder 14, **dadurch gekennzeichnet, dass** der Förderwagen (13) in die Aufnahme (5) eingeschoben wird, wodurch die Verriegelungsschiene (7) das Verriegelungselement (6) aus der Verriegelungsposition (P) schiebt, insbesondere wegschwenkt, wobei dann, wenn der Förderwagen (13) vollständig, insbesondere bis zu einem Anschlag (14) eingefahren ist, das Verriegelungselement (6) sich, insbesondere automatisch, in die Verriegelungsposition (P) zurückbewegt.

## Geänderte Patentansprüche

### Geänderte Patentansprüche gemäss Regel 137(2) EPÜ.

1. Hebevorrichtung (4), insbesondere Armhebevorrichtung (4) für eine lebensmittelverarbeitende Maschine (1) mit einer Aufnahme (5) für einen Förderwagen (13), wobei die Aufnahme (5) Aufnahmeschlitze (8) für seitlich am Förderwagen (13) angeordnete Verriegelungsschienen (7) aufweist und mit
einem Verriegelungselement (6), das in einer Verriegelungsposition (P) eine Verriegelungsschiene (7) in einem Aufnahmeschlitz (8) verriegelt,
**gekennzeichnet durch**
eine Sensoreinrichtung (2) zum Erfassen, ob das Verriegelungselement (6) in der Verriegelungsposition (P) ist, indem die Stellung des Verriegelungselements selbst abgefragt wird.

2. Hebevorrichtung (4) nach Anspruch 1, **dadurch gekennzeichnet, dass** die Sensoreinrichtung (2) ein Freigabesignal zum Bedienen der Hebevorrichtung erzeugen, wenn das Verriegelungselement (6) in der Verriegelungsposition (P) ist.

3. Hebevorrichtung (4) nach Anspruch 1 oder 2, **dadurch gekennzeichnet, dass** das bewegliche Verriegelungselement (6) selbstständig schließt und die Verriegelungsposition (P) einnimmt, wenn der Förderwagen (13) vollständig, insbesondere bis zu einem Anschlag (14) eingeschoben wird und insbesondere das Verriegelungselement (6) die Verriegelungsposition (P) einnimmt, wenn kein Förderwagen in die Aufnahme eingeschoben wird.

4. Hebevorrichtung (4) nach mindestens einem der Ansprüche 1 bis 3, **dadurch gekennzeichnet, dass** das Verriegelungselement (6) als Hebel ausgebildet ist und beim Einschieben der Verriegelungsschienen (7) in die Ausnahmeschlitze (8) weggeschwenkt wird, wobei wenn der Förderwagen (13) vollständig, insbesondere bis zu einem Anschlag (14) eingeschoben ist, er automatisch in die Verriegelungsposition (P) zurückschwenkt und die Verriegelungsschiene in dem Aufnahmeschlitz verriegelt.

5. Hebevorrichtung (4) nach mindestens Anspruch 3 oder 4, **dadurch gekennzeichnet, dass** das Verriegelungselement (6), insbesondere der Hebel, durch eine Rückstellkraft, insbesondere Federkraft einer Rückstellfeder, in die Verriegelungsposition (P) gebracht wird, insbesondere zurückgeschwenkt wird.

6. Hebevorrichtung (4) nach mindestens einem der Ansprüche 1 bis 5, **dadurch gekennzeichnet, dass** das Verriegelungselement (6), insbesondere der Hebel, durch Betätigung der Verriegelungseinrichtung entriegelbar ist, insbesondere verschenkt werden kann, derart, dass die Verriegelungsschienen (7) aus den Aufnahmeschlitzen herausgezogen werden können.

7. Hebevorrichtung (4) nach mindestens einem der Ansprüche 1 bis 6, **dadurch gekennzeichnet, dass** das Verriegelungselement (6) ein Tritthebel ist.

8. Hebevorrichtung (4) nach mindestens einem der vorherigen Ansprüche, **dadurch gekennzeichnet, dass** die Sensoreinrichtung (2) einen optischen oder elektronischen Sensor (18a) umfasst oder eine elektromechanische Abtasteinrichtung.

9. Hebevorrichtung (4) nach mindestens einem der Ansprüche 1 bis 8, **dadurch gekennzeichnet, dass** an dem Verriegelungselement (6), insbesondere am Hebel (6), ein Betätiger (18b) angeordnet ist, dessen Position erfassbar ist, und der insbesondere in einer Verriegelungsposition einen Sensor (18a) betätigt um das Freigabesignal zu erzeugen.

10. Hebevorrichtung (4) nach mindestens einem der Ansprüche 1 bis 9, **dadurch gekennzeichnet, dass** die Aufnahme (5) als U-förmiger Aufnahmekorb ausgebildet ist und das Verriegelungselement (6) an einem der gegenüberliegenden Aufnahmearme (5a,5b) angeordnet ist, insbesondere an dem Aufnahmearm (5a), der dem Aufnahmearm (5b), an dem ein Hubarm (12) befestigt ist, gegenüberliegt.

11. Lebensmittelverarbeitende Maschine (1) mit einer Hebevorrichtung (4) nach mindestens einem der Ansprüche 1 bis 10, **dadurch gekennzeichnet, dass** die lebensmittelverarbeitende Maschine (1) eine Steuereinrichtung (11) aufweist, die ein Freigabesignal zum Bedienen der Hebevorrichtung von der Sensoreinrichtung (2) erhält, wenn das Verriegelungselement (6) in einer Verriegelungsposition (P) ist.

12. Lebensmittelverarbeitende Maschine (1) nach Anspruch 11, **dadurch gekennzeichnet, dass** die Steuereinrichtung (11) bei Fehlen des Freigabesignals software- oder hardwareseitig keine Freigabe für die Betätigung der Hebevorrichtung gibt.

13. Verfahren zum Anheben eines Förderwagens (11) mit einer Hebevorrichtung (4) einer lebensmittelverarbeitenden Maschine (1), insbesondere nach Anspruch 11 oder 12, **dadurch gekennzeichnet, dass** ein Förderwagen (13) in eine Aufnahme (5) für einen Förderwagen (13) eingeschoben wird und erfasst wird, ob ein Verriegelungselement (6) zum Verriegeln einer Verriegelungsschiene (7) des Förderwagens (13) in einem Aufnahmeschlitz (8) der Aufnahme (5) in einer Verriegelungsposition (P) ist, indem die Stellung des Verriegelungselements selbst abgefragt wird.

14. Verfahren nach Anspruch 13, **dadurch gekennzeichnet, dass** eine Steuereinrichtung (11) die Betätigung der Hebevorrichtung (4) nur freigibt, wenn sie von der Sensoreinrichtung (2) ein Freigabesignal erhält.

15. Verfahren nach Anspruch 13 oder 14, **dadurch gekennzeichnet, dass** der Förderwagen (13) in die Aufnahme (5) eingeschoben wird, wodurch die Verriegelungsschiene (7) das Verriegelungselement (6) aus der Verriegelungsposition (P) schiebt, insbesondere wegschwenkt, wobei dann, wenn der Förderwagen (13) vollständig, insbesondere bis zu einem Anschlag (14) eingefahren ist, das Verriegelungselement (6) sich, insbesondere automatisch, in die Verriegelungsposition (P) zurückbewegt.
